(19) Europäisches Patentamt

European Patent Office

Office européen des brevets

(11) Publication number: **0 266 167 B1**

(12) **EUROPEAN PATENT SPECIFICATION**

(45) Date of publication of patent specification: **28.08.91**   (51) Int. Cl.⁵: **E01B 31/18, C21D 9/04**

(21) Application number: **87309478.3**

(22) Date of filing: **27.10.87**

(54) **Insitu energy beam processing of railroad track and equipment for increasing service lifetime.**

(30) Priority: **31.10.86 GB 8626051**

(43) Date of publication of application:
**04.05.88 Bulletin 88/18**

(45) Publication of the grant of the patent:
**28.08.91 Bulletin 91/35**

(84) Designated Contracting States:
**BE DE ES FR GB IT NL**

(56) References cited:
**EP-A- 0 035 401      EP-A- 0 130 749**
**BE-A- 860 643        US-A- 4 015 100**
**US-A- 4 201 602      US-A- 4 458 125**

**PATENT ABSTRACTS OF JAPAN, vol. 7, no.
185 (C-181)[1330], 13 août 1983; & JP-A-58 91
122 (TOKYO SHIBAURA DENKI K.K.)
31-05-1983**

**WELDING AND METAL FABRICATION, vol. 51,
no. 9, November 1983, pages 453-7; Hay-
wards Heath, Sussex, GB; W.M. STEEN et al.:
"The laser's other role"**

**Article "A Comparative Analysis of Laser
Welding Performance" in Industrial Laser
Handbook**

(73) Proprietor: **Seguin, Herb Joseph John
12639 52 Avenue
Edmonton Alberta, T6H OP6(CA)**

(72) Inventor: **Seguin, Herb Joseph John
12639 52 Avenue
Edmonton Alberta, T6H OP6(CA)**

(74) Representative: **Jones, Michael Raymond et al
HASELTINE LAKE & CO. Hazlitt House 28
Southampton Buildings Chancery Lane
London WC2A 1AT(GB)**

## Description

This invention relates generally to the refurbishing in situ of railroad equipment such as rail tops and side surfaces, rail splitters, rolling stock wheels, and other surfaces subject to operational wear in the general rail transport industry. More particularly; this invention provides a method and apparatus for accomplishing such refurbishing by the use of a laser, or out-of-vacuum electron beam.

Because of the very high surface loading and frequency of application of concomitant stresses in railroad equipment such as rails, buggy and train wheels, switch gear and the like, as well as the difficulty of effectively utilizing lubrication, such equipment is often prone to very rapid wear and/or microcrack damage.

As an example, in regions of very high traffic or sharp curves it is not uncommon to have to replace rails at intervals as short as 6 months. An even worse wear condition is sometimes found with the steel wheels of the train engines and other heavily loaded rolling stock, such as in the case of unit trains. As a result of this situation it has been estimated that the cost of rail repair and replacement in North America amounts to over 2 billion dollars annually.

Because of this persistent wear problem and the associated very great expense and interruption of service imposed by component replacement, a few recently constructed rail tracks have been built with special wear resistant rails. This procedure, which involves the manufacture of rails of a high grade steel and subsequent case hardening, has been found to be very effective in reducing track wear or microcrack damage, such that the useful life of a particular track may be extended by as much as 5 times.

Unfortunately however, this solution is very expensive, both in terms of the extra cost of the higher quality steel and the cost of the induction hardening process and equipment necessary, not to mention the very high labour costs involved in rail replacement.

The deterioration of railroad rail and wheel surfaces (the rail-wheel interface problem) is generally characterized by two mechanisms of material removal. These occur at the wheel and rail contact points. The two processes are:

1. Microscopic material loss due to friction generated abrasion.
2. Macroscopic material loss due to flaking, spalling or shelling.

The first mechanism, friction generated abrasion, results in a gradual loss of surface material predominantly on the wheel flanges and inside surfaces of the "high rail"; particularly on curves. This type of frictional wear can result in very rapid rail and wheel deterioration if lubrication is not present. This aspect has now become particularly troublesome with the ever increasing appearance of heavily loaded unit trains.

This being the case, automatic flange-lubricators are increasingly being installed on railroad lines, particularly before sharp curves. Lubrication of the wheel flange and inside rail surface has resulted in an extension of the useful lifetime of these items by as much as a factor of 3. An additional but equally important side benefit that has been realized by rail lubrication is a near 30% reduction in fuel costs for the prime mover. Consequently, rail lubrication is rapidly becoming a universally accepted procedure.

However, the second type of material removal, generally categorized by descriptive terms such as dandruff, flaking, spalling and shelling, can be a much more rapid and debilitating process (once it has started) , since unlike the case of microscopic abrasive wear, relatively large particles of material are dislodged.

The term dandruff is characterized by the generation of small particles, typically less than 1 or 2 square mm in area and perhaps a maximum of 0.1 mm thick. In flaking, the particle size ranges up to about 1 or 2 square cm in area and up to 1 mm in thickness. Spalling and shelling usually refer to the generation and loss of surface particulates that are larger still.

As might be expected, this second type of material loss can be very detrimental to rail service, since once it has started it progresses very rapidly. This follows as a consequence of the large nonuniformity created in the rail-wheel contact surface by the loss of a flake. The condition results in impact loading of the members, accompanied by a further acceleration in the phenomenon. The generation of "corrugations" is often a subsequent symptomatic feature of this flaking deterioration process. These phenomena generally affect both wheel and rail members with equal severity.

In certain instances, microcracks can propagate large distances in the horizontal plane and then suddenly execute a 90° turn into the bulk material. Such a phenomenon can quickly lead to very deep vertical cracks developing into the bulk rail member. This process, commonly known as a "squat", can if undetected and repaired subsequently lead to a very serious complete transverse break in the rail track.

As of the present time there has been no effective in situ remedy for these flaking, shelling or squat processes, other than to grind off the top of the rail head and wheel surfaces to a considerable depth. In many cases companion microcracks propagate deep within the bulk material and the items must then be replaced.

Experiment has shown that the reason for the development of this flaking or shelling phenomenon, which has become much more severe now that lubrication has been adopted, is due to the propagation of fatigue-generated microcracks.

In the consideration of this rail-wheel interface problem it is important to recognize that because of a significant overstressing with concomitant yielding and plastic flow of the members, the maximum stress usually does not occur at the surface, but rather at a plane a few mm below the cap.

In particular, since the individual wheel loading is now typically 32,000 pounds and further since the vertical contact area is generally only about the size of a dime (about 1 square cm in area), the stress to which the steel rail and wheel material is subjected is in the range of 10,000 to 13,333 x $10^5$ $Nm^{-2}$ (150,000 to 200,000 psi). As a consequence the surface material on both rail and wheel is cyclicly loaded far beyond its elastic limit, upon passage of each train wheel. The process gradually causes cyclic stress fatigue of the surface and near-surface material, which in turn leads to the formation of a large number of microcracks.

If these cracks remain dry the coefficient of friction within them will stay at about 0.5. Now since the coefficient of friction at the rail-wheel interface is typically only about 0.3 for dry rail and still less at 0.18 for lubricated rail, these microcracks are "locked in" and do not propagate due to tip stress concentration.

However, when the track inside face is lubricated, grease invariably migrates onto the surface of the rail head also. This grease is in turn gradually forced into these microcracks; thereby also lowering their coefficient of friction to 0.18. Thus if the rail-wheel interface ever becomes nonlubricated or dry, a situation soon develops whereby the coefficient of friction in the microcrack is considerably lower than that at the rail surface.

This condition permits lateral differential movement of the sides of the microcrack with the generation of a concomitant extreme stress concentration at the crack tip. The situation leads to rapid crack propagation in a direction parallel to the rail top surface (mode No.1 propagation). Ultimately these cracks propagate large horizontal distances just beneath the surface; and thereby produce large area thin flakes, which eventually become dislodged. The process leaves behind a relatively deep depression in the rail-wheel interface.

The occurrence of such a defect accelerates the propagation of other microcracks due to the impact loading effect from the nonuniform surface. Once the flaking process has started, quick rail and wheel grinding is mandatory; otherwise the phenomenon will rapidly deteriorate these members to a nonserviceable condition.

According to a first aspect of the present invention there is provided a method of repairing cracks in the metal of a rail of a railway track or a wheel of a rail vehicle, the method comprising:

generating an intense beam of energy capable of generating a vapour space in the metal;

directing the intense beam of energy towards the cracks in the metal;

vapourising metal within the rail or wheel in the vicinity of the cracks to form a vapour space within the rail or wheel; and

moving the beam of energy along the rail or wheel at a speed such that the metal surrounding the cracks melts when the intense beam of energy is directed towards the metal and solidifies after the intense beam of energy moves on.

According to a second aspect of the present invention there is provided apparatus for repairing cracks in the metal of a rail of a railway track or a wheel of a rail vehicle, the apparatus comprising:

means for generating an intense beam of energy capable of generating a vapour space in the metal;

means for directing the intense beam of energy towards the cracks in the metal;

means for vapourising metal within the rail or wheel in the vicinity of the cracks to form a vapour space within the rail or wheel; and

means for moving the beam of energy along the rail or wheel at a speed such that the metal surrounding the cracks melts when the intense beam of energy is directed towards the metal and solidifies after the intense beam of energy moves on.

The method according to the first aspect of the invention may also include grinding the solidified metal after the metal has cooled.

The present invention is useful in the repair of rail surfaces already severely damaged by microcracks, through the mechanism of melting and resolidification of the affected area. In this manner, rail head sections which have previously developed serious cracks but have not yet spalled or shelled significantly, could conceivably be effectively rejuvenated by allowing an intense beam to remelt the cracked area. In such cases it may also be beneficial to add a small amount of alloy "filler material", possibly in the form of a feed wire, so as to provide an even better abrasive and microcrack resistance.

The intense beam of energy may be generated by an out-of-vacuum electron beam or more preferably by a laser. In order to increase the process speed significantly, it would be possible to use a laser beam with plasma or arc "augmentation", such that additional electrical energy could be conveyed directly into the keyhole (the vapour space created by the beam) via the ionization path provided by the laser radiation. In this manner, a factor of four times or more in process speed should be achievable, without the need for a larger laser device. In principle it should also be possible to utilize an intense out-of-vacuum electron beam to provide the "keyhole" energy deposition required for the process.

In areas where significant surface material loss has already occurred due to flaking or shelling, it would likewise be possible to reclaim the rail by replacing the lost surface material by an in situ laser cladding process, also forming an aspect of this invention. In such instances the rail head would most probably have to be "finish ground" to the final optimum dimensions. In this connection, profile rail grinding machines are already well established in the rail transport industry.

The intense beam of energy may be split into at least two beams of energy, which may be directed towards the same rail or wheel.

The rail or wheel may be force-cooled after the energy beam has been applied by quenching with liquid.

One embodiment of this invention is illustrated in the accompanying drawings, in which like numerals denote like parts throughout the several views, and in which:

Figure 1 is a side elevational view of a vehicle incorporating this invention; and

Figure 2 is a railway track profile showing typical locations where rail rejuvenation can take place in accordance with this invention.

In the following description, it is assumed that the apparatus for generating an energy beam includes a high-powered laser, specifically a $CO_2$ laser which generates an infra-red energy beam. However, it is considered that the laser apparatus could be replaced by other apparatus, for example that capable of generating an out-of-vacuum electron beam.

In order to accomplish the laser transformation or alloying of railway tracks in accordance with this invention, it is considered necessary to process both rails simultaneously. This means that the vehicle will require a duplicate set of equipment, one for each rail.

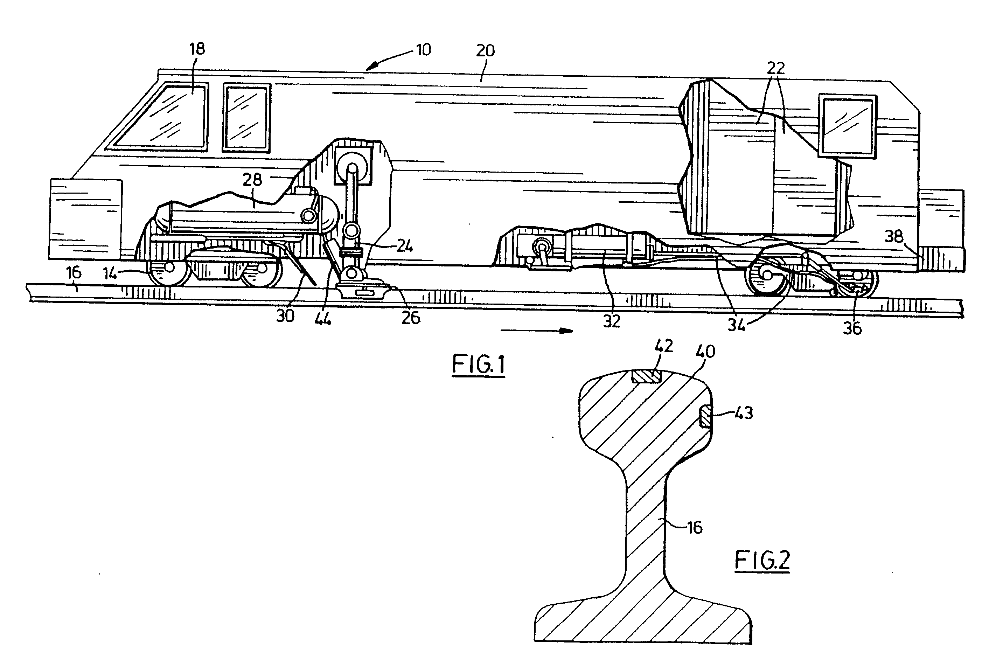

Referring to Figure 1, a vehicle shown generally at the numeral 10 is adapted to be pulled and powered by an auxilliary small, shunting type, diesel-electric locomotive. However, the vehicle 10 may also be self-powered, as will be obvious to those skilled in the art.

The vehicle 10 is provided with wheels 14 similar to normal train wheels and adapted to ride along tracks 16, a cab 18 to house the operating personnel, two lasers of which one can be seen at 20, electric power supplies 22 for the two lasers, optical beam-transport systems 24 (only one seen in Figure 1) for directing the beam onto the track 16, optical application heads 26 capable of splitting the beam, if required, to produce separated strips of hardened or alloy material on the tracks 16, a tank 28 to hold a quenching liquid such as oil or water, a liquid feed mechanism 30 located to the left of the head 26 (behind the head in the direction of travel), a paint container 32, feed lines 34 to direct paint to a paint applictor 36, and a latching apparatus 38 by which the vehicle 10 can be connected to a locomotive to be pulled.

The power source in the pulling locomotive (or built into the vehicle 10 if desired) would preferably be a diesel-powered or gas-turbine electrical generator, of sufficient capacity to operate the lasers 20 and their associated peripheral equipment. The lasers 20 are typically high powered, continuous wave, carbon dioxide lasers, each capable of continuously producing an output beam power of 20 Kw or more. In addition, each laser may be fitted with plasma or arc augmentation equipment so as to provide additional vapour space (keyhole) energy for increasing the process speed.

For each laser, there is a beam transport and application system, the control of which is located inside the environmentally controlled cab 18. The beam transport corridors are used to conduct the intense beams from each laser to the respective rail surface. Each transport subsystem incorporates a cylindrical beam-integrator line-focusing unit, to provide the appropriate irradiance profile of the surface to be laser treated. The design and construction of these beam systems provides for positional flexibility and rail tracking, adequate for continuous profiled illumination of the work piece.

Sequential control and process monitoring equipment is part of the computer-based system, and provides automatic operation of the laser refurbishment or alloying process.

Each head 36 incorporates a paint spray system, to apply to the respective rails the light-absorbing coating required for efficient laser beam absorption.

Figure 2 shows the profile of a typical rail 16. Located at the cap 40 of the rail 16 are two regions 42 and 43 that have been treated. The region 42 is on the crown, whereas the region 43 is on the inside edge of the cap 40. The treated location 42 provides for primary loading bearing, while the side track location 43 provides for wheel flange guidance.

In order to produce the two spaced-apart regions 42 and 43, the laser beam would have to be split optically. This can be done with conventional optics known in the field.

If desired, a variant of the invention may involve utilizing an additional piece 44 of apparatus to provide a fusible wire or metallic powder simultaneously with the energy from the laser beam, so that the beam can alloy into or fuse the metallic powder to the track. A suitable material would be stellite, or some other hardening alloying element.

In the case of the remelting of microcracks in a track, the level of energy in the beam is high enough to create a moving vapour space (keyhole) in the track at the location of incidence of the beam, whereby the material surrounding the keyhole is in molten form and solidifies after the beam moves on. In the case of alloying, the alloying wire or similar material can be fed directly into such keyhole.

Numerous advantages can be gained from the use of the system described herein, which utilizes a laser as a heat source and accomplishes an in situ transformation of the surface or near-surface layers of the track. Some of the more obvious advantages are set forth below:

## 1. Good Surface Hardness with Inner Ductility

In the case of microcrack elimination and repair, actual melting of the rail material is required; However, the interaction area is precisely definable with respect of the width and depth achieved within the remelted region. The previously mentioned vapour space or "keyhole" effect would considerably enhance the speed of the interaction, since laser energy could now be more easily conducted into the rail material.

## 2. Energy Efficient and Cost Effective

Since the area to be treated can be confined to a small region, the process is extremely energy efficient and cost effective.

## 3. Variability in Shape of Work Piece

Since the beam transport and focusing systems of a laser machine can be designed with a high degree of flexibility, any variation in shape or position of the area to be laser treated can be easily and quickly accommodated. Thus the full range of wear surfaces found in the rail transport industry would be amenable to this invention, including wheels.

## 4. High Process Speed

The process speed can be very rapid if very large lasers with plasma or arc augmentation are used. This means that long lengths of railway may be treated in relatively short periods, thereby making the concept operationally practical.

## 5. Non-Contacting Process with no Attached Equipment

Since the process is a non-contact one (i.e. the laser energy is remotely beamed to the rail or wheel surfaces to be treated), and further since no special equipment is required to be attached to the rails etc., the entire process may be started and stopped at will, and very quickly. Further this process lends itself very well to use with a self-propelled stand-alone vehicle of the kind described above in connection with Figure 1. By providing the vehicle with a 90° swivelling capability and rubber wheels set at right angles to the rail wheels 14, so that it can quickly mount or dismount the railroad right-of-way at any grade level crossing, the laser rail treatment process can proceed almost continuously -- interrupted only briefly as rail traffic periodically comes along. Alternatively, in track areas equipped with regularly spaced off sidings, the vehicle could merely stop at these points and allow the normal rail traffic to go by. In this case the vehicle does not require extra wheels to permit perpendicular movement at grade level crossings.

## 6. Day Long and Year Round Production

The laser process could be done at any time of the day or night and throughout the year, largely irrespective of prevailing weather conditions. Consequently the "equipment utilization factor" could be high. This aspect would not only provide for good yearly production rates but also for a speedy amortization of the special laser-based machine required for the process.

## 7. Re-Application of Process

In heavily loaded and/or high traffic areas, subject to excessive wear the process could be repeated at regular intervals, thereby providing for an even greater extension of track lifetime.

## 8. Hardening Process Applicable to Old Equipment

Since the process is a non-contact interaction only at the surface or near-surface region, it would be equally applicable to "old" track and to new, irrespective of the physical condition of the steel itself (i.e. dirty, rusted etc.).

## 9. High Quality Mode Unnecessary

Since the process does not require a highly focused beam, it follows that a high quality laser beam with well-defined or controlled mode shape is not necessary. Simple "beam integrator optics" could provide adequate uniformity of illumination, irrespective of the mode pattern. Happily this feature considerably relaxes and simplifies the optical aspects of the high power required for the application.

## 10. Non-Precision Tracking

Since the process is relatively non-precision with respect to substrate illumination, an accurate beam tracking system is not required. Thus simple follower guide-wheels, placed on the rails themselves, would provide all the accuracy that would be necessary.

## 11. Lack of Need to Apply Absorbing Coating

Since experiment has shown that carbon dioxide laser radiation is easily reflected by polished metallic surfaces, it is considered necessary in most cases to coat the rail surfaces with a thin layer of absorbing paint or the like. As explained earlier, this process, already well understood and utilized in the laser hardening field, could be accomplished simply by spraying a thin coat of black paint onto the rails, just immediately prior to treatment. A small spray nozzle would be mounted slightly above each track and somewhat ahead of the main optical beam application systems. In the past it has been found advantageous to couple out and apply a small percentage of the laser radiation a few meters ahead of the main beam, so as to "pre-cure" this sprayed-on absorbing coating.

It has been found that for the present invention, where the rail surface is to be remelted, it is not necessary to apply an absorbing coating. This is the case because experiment has documented that in each instance the molten material itself provides adequate laser beam absorption.

## 12. Labour Non-Intensive

Since the laser and its associated beam delivery and tracking systems are computer controlled, and also since the vehicle is essentially self-steering during operation, the process requires very few people, perhaps only 2 (a laser technician and a laser operator).

In the practice of the present invention, in which only a narrow channel or strip is to be melted and resolidified then a 40 Kw laser could be expected to yield a production rate of about 9 cm/s. This would translate into about 1000 feet of processed track per hour. With anticipated improvements in lasers and process efficiency, a production rate of near a half mile per hour might ultimately be realizable. Also, if plasma or arc augmentation culd be employed to convey additional electrical energy into the vapour space (keyhole) via the laser's ionization path, then a process rate about four times faster could be achieved.

Where the material being processed is melted, He cover-gas is required to protect the rail from the ambient air. Nitrogen or carbon dioxide as the cover-gas is also expected to be adequate.

These aspects, plus the fact that no ancillary equipment is required to be attached to the rails, means that the process costs could be quite low: essentially little more than the running cost of the lasers and the salaries of the 2 operators.

## Claims

1. A method of repairing cracks in the metal of a rail of a railway track or a wheel of a rail vehicle, the method comprising:

   generating an intense beam of energy capable of generating a vapour space in the metal;

   directing the intense beam of energy towards the cracks in the metal;

   vapourising metal within the rail or wheel in the vicinity of the cracks to form a vapour space within the rail or wheel; and

   moving the beam of energy along the rail or wheel at a speed such that the metal surrounding the cracks melts when the intense beam of energy is directed towards the metal and solidifies after the intense beam of energy moves on.

2. A method according to claim 1, further comprising supplying the vapour space with an alloying metal.

3. A method according to claim 2, wherein the alloying metal is in the form of a wire, which is continuously fed into the vapour space as it moves.

4. A method according to any preceding claim, further comprising cooling the metal by quenching the metal with a liquid.

5. A method according to any preceding claim, further comprising grinding the solidified metal after the metal has cooled.

6. A method according to any preceding claim, which further comprises splitting the beam of energy into at least two beams of energy and directing the beams towards the same rail or wheel.

7. Apparatus for repairing cracks in the metal of a rail of a railway track or a wheel of a rail vehicle, the apparatus comprising:

   means for generating an intense beam of energy capable of generating a vapour space in the metal;

means for directing the intense beam of energy towards the cracks in the metal;

means for vapourising metal within the rail or wheel in the vicinity of the cracks to form a vapour space within the rail or wheel; and

means for moving the beam of energy along the rail or wheel at a speed such that the metal surrounding the cracks melts when the intense beam of energy is directed towards the metal and solidifies after the intense beam of energy moves on.

8. Apparatus according to claim 7, further comprising means for supplying the vapour space with an alloying metal.

9. Apparatus according to claim 8, wherein the means are capable of supplying the vapour space continuously with the alloying metal in the form of wire.

10. Apparatus according to any one of claims 7 to 9, further comprising means for cooling the metal by quenching the metal with a liquid.

11. Apparatus according to any one of claims 7 to 10, further comprising means for grinding the solidified metal.

12. Apparatus according to any one of claims 7 to 11, wherein the means for generating an intense beam of energy is a laser.

13. Apparatus according to any one of claims 7 to 12, which further includes means for augmenting the beam of energy with an electric arc discharge.

14. Apparatus according to any one of claims 7 to 13, which further comprises means for splitting the beam of energy into at least two beams of energy.

**Revendications**

1. Une méthode de réparation des criques dans le métal d'un rail d'une voie de chemin de fer ou d'une roue d'un véhicule sur rail, la méthode comprenant :

la production d'un faisceau intense d'énergie capable de produire un espace de vapeur dans le métal ;

l'orientation du faisceau intense d'énergie vers les criques dans le métal ;

la vaporisation du métal dans le rail ou la roue à proximité des criques pour former un espace de vapeur dans le rail ou la roue ; et

le déplacement du faisceau d'énergie le long du rail ou de la roue à une vitesse telle que le métal entourant les criques fonde lorsque le faisceau intense d'énergie est orienté vers le métal et se solidifie après que le faisceau intense d'énergie ait avancé.

2. Une méthode conforme à la revendication 1, comprenant de plus l'alimentation de l'espace de vapeur avec un métal d'alliage.

3. Une méthode conforme à la revendication 2, caractérisée en ce que le métal d'alliage a la forme d'un fil, qui est alimenté en continu dans l'espace de vapeur au fur et à mesure qu'il avance.

4. Une méthode conforme à l'une ou l'autre des précédentes revendications, comprenant de plus le refroidissement du métal par trempe du métal avec un liquide.

5. Une méthode conforme à l'une des revendications précédentes comprenant de plus le meulage du métal solidifié après que le métal ait refroidi.

6. Une méthode conforme à l'une des revendications précédentes qui comprend de plus la division du faisceau d'énergie en au moins deux faisceaux d'énergie et l'orientation des faisceaux vers le même rail ou la même roue.

7. Un appareil pour réparer les criques dans le métal d'un rail d'une voie de chemin de fer ou d'une roue d'un véhicule sur rail, l'appareil comprenant :

un moyen pour produire un intense faisceau d'énergie capable de produire un espace de vapeur dans le métal ;

un moyen pour orienter le faisceau intense d'énergie vers les criques dans le métal ;

un moyen pour vaporiser le métal dans le rail ou la roue à proximité des criques pour former un espace de vapeur dans le rail ou la roue ; et

un moyen pour déplacer le faisceau d'énergie le long du rail ou de la roue à une vitesse telle que le métal entourant les criques, fonde lorsque le faisceau intense d'énergie est orienté vers le métal et se solidifie après que le faisceau intense d'énergie ait avancé.

8. Un appareil conforme à la revendication 7, comprenant de plus un moyen pour alimenter l'espace de vapeur avec un métal d'alliage.

9. Un appareil conforme à la revendication 8, caractérisé en ce que les moyens sont capables d'alimenter l'espace de vapeur en continu avec le métal d'alliage sous forme de fil.

10. Un appareil conforme à l'une des revendications 7 à 9, comprenant de plus un moyen pour refroidir le métal en trempant le métal avec un liquide.

11. Un appareil conforme à l'une des revendications 7 à 10, comprenant de plus un moyen pour meuler le métal solidifié.

12. Un appareil conforme à l'une des revendications 7 à 11, caractérisé en ce que le moyen pour produire un faisceau intense d'énergie est un laser.

13. Un appareil conforme à l'une des revendications 7 à 12, qui comprend de plus un moyen pour augmenter le faisceau d'énergie avec une décharge d'arc électrique.

14. Un appareil conforme à l'une des revendications 7 à 13 qui comprend de plus un moyen pour diviser le faisceau d'énergie en au moins deux faisceaux d'énergie.

**Patentansprüche**

1. Verfahren zum Reparieren von Brüchen im Metall eines Schienenstranges von Eisenbahngleisen oder von Rädern von Schienenfahrzeugen, wobei das Verfahren umfaßt: Erzeugen eines intensiven Energiestrahles, welcher einen Gasraum im Metall erzeugen kann; Ausrichten des intensiven Energiestrahles auf den Bruch im Metall; Verdampfen von Metall innerhalb des Schienenstranges oder Rades in der Nähe des Bruches, so daß ein Gasraum innerhalb des Schienenstranges oder Rades ausgebildet wird; und Bewegen des Energiestrahles entlang des Schienenstranges oder Rades mit solcher Geschwindigkeit, daß das den Bruch umgebende Metall schmilzt, wenn der intensive Energiestrahl auf das Metall gerichtet wird und sich nach Weiterbewegung des Energiestrahles verfestigt.

2. Verfahren nach Anspruch 1, wobei man den Gasraum mit legierendem Metall versorgt.

3. Verfahren nach Anspruch 2, bei dem das legierende Metall die Form eines Drahtes hat, welcher kontinuierlich in den Gasraum geführt wirrd.

4. Verfahren nach einem der vorhergehenden Ansprüche, bei dem außerdem das Metall durch Löschen mit einer Flüssigkeit gekühlt wird.

5. Verfahren nach einem der vorhergehenden Ansprüche, bei dem außerdem ein Schleifen des verfestigten Metalls nach dessen Abkühlung erfolgt.

6. Verfahren nach einem der vorhergehenden Ansprüche, bei dem außerdem die Spaltung des Energiestrahles in wenigstens zwei Energiestrahlen und ein Ausrichten derselben auf den gleichen Schienenstrang oder das gleiche Rad erfolgt.

7. Vorrichtung zum Reparieren von Brüchen im Metall eines Schienenstranges von Eisenbahngleisen oder von Rädern von Schienenfahrzeugen, umfassend: Mittel für die Erzeugung eines intensiven Energiestrahles der einen Gasraum im Metall erzeugen kann; Mittel zum Ausrichten des intensiven Energiestrahles auf die Brüche im Metall; Mittel zum Verdampfen von Metall innerhalb des Schienenstranges oder Rades in Nähe der Brüche zum Herstellen eines Gasraumes innerhalb des Schienenstranges oder Rades; und Mittel zum Bewegen des Energiestrahles entlang des Schienenstranges oder Rades mit einer Geschwindigkeit, bei der das Metall in der Umgebung der Brüche schmilzt, wenn der intensive Energiestrahl auf das Metall gerichtet ist und sich nach dem Weiterbewegen des intensiven Energiestrahles verfestigt.

8. Vorrichtung nach Anspruch 7, die außerdem Mittel besitzt, die den Gasraum mit einem legierenden Metall versorgen.

9. Vorrichtung nach Anspruch 8, deren Mittel den Gasraum kontinuierlich mit dem legierenden Metall in Form eines Drahtes versorgen können.

10. Vorrichtung nach einem der Ansprüche 7 bis 9, die außerdem Mittel zum Kühlen des Metalls durch Ablöschen des Metalls mit einer Flüssigkeit aufweist.

11. Vorrichtung nach einem der Ansprüche 7 bis 10, die außerdem Mittel zum Schleifen des verfestigten Metalls aufweist.

12. Vorrichtung nach einem der Ansprüche 7 bis 11, wobei die Mittel zur Erzeugung eines intensiven Energiestrahles ein Laser ist.

13. Vorrichtung nach einem der Ansprüche 7 bis 12, die außerdem Mittel zur Steigerung des Energiestrahles mittels Lichtbogenentladung besitzt.

14. Vorrichtung nach einem der Ansprüche 7 bis 13, die außerdem Mittel für die Teilung des Energiestrahles in wenigstens zwei Energiestrahlen aufweist.

FIG.1

FIG.2